(19) **Europäisches Patentamt**

**European Patent Office**

**Office européen des brevets**

(11) Numéro de publication : **0 362 053 B1**

(12) # FASCICULE DE BREVET EUROPEEN

(45) Date de publication du fascicule du brevet :
**02.06.93 Bulletin 93/22**

(51) Int. Cl.$^5$ : **F02K 9/78,** F02K 7/16,
F02K 7/18

(21) Numéro de dépôt : **89402638.4**

(22) Date de dépôt : **27.09.89**

(54) **Structure de propulseur combiné compatible avec deux types de fonctionnement.**

(30) Priorité : **28.09.88 FR 8812647**

(43) Date de publication de la demande :
**04.04.90 Bulletin 90/14**

(45) Mention de la délivrance du brevet :
**02.06.93 Bulletin 93/22**

(84) Etats contractants désignés :
**DE FR GB IT**

(56) Documents cités :
**EP-A- 0 247 388
BE-A- 551 416
DE-C- 3 617 915
FR-A- 1 169 626
US-A- 2 482 505
US-A- 2 933 886
US-A- 3 172 253
US-A- 3 230 701**

(73) Titulaire : **SOCIETE NATIONALE D'ETUDE ET
DE CONSTRUCTION DE MOTEURS
D'AVIATION, "S.N.E.C.M.A."
2, Boulevard du Général Martial Valin
F-75015 Paris (FR)**

(72) Inventeur : **Labatut, Josiane, Marie-Françoise
5, rue Pierre Brossolette
F-91330 Yerres (FR)**
Inventeur : **Marlin, François, Marie, Paul
64, Bd. Aristide Briand
F-77000 Melun (FR)**
Inventeur : **Mazeaud, Georges
Les rives de l'Yerres Bâtiment B3
F-91330 Yerres (FR)**
Inventeur : **Mirville, François, Jean-Pierre
3, rue de la Contrescarpe
F-77000 Melun (FR)**

(74) Mandataire : **Moinat, François et al
S.N.E.C.M.A. Service des Brevets Boîte
Postale 81
F-91003 Evry Cédex (FR)**

## Description

La présente invention a pour domaine technique celui des propulseurs pour engins spatiaux, tels que ceux envisagés pour la fin du XXe siècle et le début du XXIe siècle, qui devront pouvoir décoller d'une piste horizontale, emmener une charge marchande à une altitude pouvant avoisiner 200km et à une vitesse pouvant dépasser Mach 20, puis redescendre au sol et atterrir sur une piste horizontale.

Pour permettre que ce genre d'engins soient réutilisables, il est nécessaire de les doter d'un propulseur utilisable dans tout le domaine de vol et dont le fonctionnement puisse être réversible afin qu'il puisse éventuellement utiliser son propulseur pour le retour dans l'atmosphère et pour éventuellement pouvoir choisir son terrain d'atterrissage.

De tels engins sont envisagés pour deux types de missions : un premier type consiste à transporter des charges dans l'espace (satellites ou approvisionnement de véhicules spatiaux restant en orbite), puis à revenir au sol pour effectuer ensuite de nouvelle missions.

Un autre type de mission peut consister à utiliser les très grandes vitesses et les très hautes altitudes que peuvent atteindre les engins spatiaux pour effectuer du transport ultra-rapide entre deux points éloignés du globe terrestre.

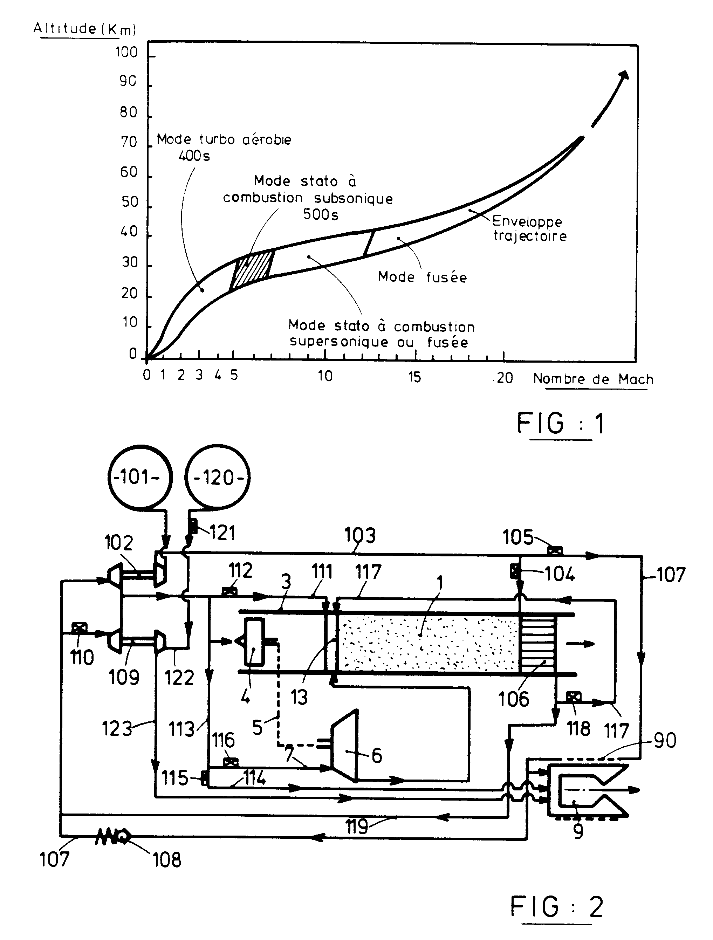

Pour couvrir tout le domaine de vol de ces genres de missions, il est nécessaire d'utiliser trois modes de fonctionnement adaptés chacun à une partie du domaine de vol, ainsi qu'on l'a représenté à la figure 1.

Ainsi, dans la partie basse du vol, jusqu'à une altitude pouvant atteindre de 20 à 25 km, et à des vitesses de l'ordre de Mach 5, on utilisera un mode de propulsion de type turboréacteur, la turbine, entraînée, soit par de l'hydrogène gazeux sous pression (mode expander), soit par les gaz d'un générateur de gaz, entrainant un compresseur d'air. Les gaz d'échappement de la turbine réinjectés dans la veine d'air comprimé, sont alors brûlés et les gaz de combustion ainsi formés assurent la poussée de l'engin.

Autour de Mach 5, le rapport de pression du compresseur est voisin de 1, le fonctionnement du compresseur s'approchant de l'autorotation.

On passe alors en mode statoréacteur qui entraîne l'engin jusqu'à une vitesse voisine de Mach 7 et à une altitude pouvant atteindre 40 km.

Au delà de cette vitesse et de cette altitude le statoréacteur à combustion subsonique est arrêté, l'entrée d'air est fermée et l'engin doit être propulsé en mode fusée.

Il est donc nécessaire de prévoir un propulseur capable de ces trois modes de fonctionnements et c'est le but de l'invention que de réaliser un tel propulseur.

D'autre part il est intéressant de prévoir une structure commune qui permette d'envisager des propulseurs réalisant des compromis (poussée, masse, impulsion spécifique, poussée par unité de surface frontale) différents et adaptés chacun à un type de véhicule et de mission déterminé.

Le DE-A-3 617 915 a déja décrit une structure de propulseur combiné turbo-stato-fusée compatible avec deux types d'alimentation en ergols liquides,

- l'un, dit expander, comportant d'une part un circuit d'alimentation en hydrogène possédant un échangeur de chaleur permettant une chauffe de l'hydrogène avant son introduction dans une turbine de puissance, en mode turbofusée ou dans une chambre de combustion en mode stato réacteur et d'autre part un circuit d'oxygène combiné avec le circuit d'hydrogène pour le mode fusée,
- l'autre, comportant deux circuits d'alimentation respectivement en oxygène et en hydrogène d'un générateur de gaz, lesdits gaz étant soit dirigés vers une turbine de puissance entraînant un compresseur, en mode turbofusée soit injectés dans la chambre de combustion en mode statoréacteur, soit relachés dans le milieu ambiant en mode fusée.

Un tel propulseur connu comporte, un corps central entouré d'une veine d'air elle-même entourée d'un carter externe, dont la turbine de puissance est disposée à l'intérieur du corps central, alimentée en gaz ou en ergols, ladite turbine entraînant un compresseur d'air, et en ce que le corps central comprend axialement à sa partie aval un moteur-fusée, lui même alimenté en ergols et expulsant des gaz dans une tuyère divergente, et dont le circuit d'alimentation comporte, outre une turbopompe à oxygène liquide pour le fonctionnement en mode fusée, une turbopompe à hydrogène liquide dont la pompe débite dans deux canalisations commandées chacune par une vanne. L'invention a donc pour objet une structure de propulseur turbo-stato-fusée du genre ci-dessus dans lequel l'une des vannes permet à l'hydrogène de subir une chauffe dans un échangeur situé sur la paroi de chambre du moteur fusée puis commandant l'admission en mode fusée dans la chambre du moteur fusée, et en aval d'un clapet anti-retour, dans les turbines des deux turbopompes tandis que l'autre vanne permet l'admission de H2 dans l'échangeur de chaleur de paroi de tuyère, en sortie duquel l'hydrogène réchauffé est débité dans deux canalisations, l'une commandée par une vanne permet l'injection d'hydrogène dans la chambre de combustion en modes turbo et stato tandis que l'autre est apte à alimenter les turbines des turbopompes. Selon une autre caractéristique de l'invention, le compresseur et la turbine sont du type axial.

2

Selon une autre caractéristique, le compresseur et la turbine sont de type double corps et contrarotatifs, le compresseur comportant d'une part un premier étage amont relié par un arbre central à un premier rotor de turbine comprenant n étages et d'autre part un second étage aval relié par un second arbre entourant le premier à un second rotor de turbine comprenant (n-1) étapes imbriqués avec les étages du premier rotor et tournant en sens inverse. Selon une particularité importante de l'invention, le dispositif d'injection est constitué par un ensemble de bras radiaux creux coopérant avec deux anneaux collecteurs, également creux, les bras et les anneaux possédant un profil aérodynamique, lesdits bras possédant une cavité amont en relation avec le canal annulaire d'éjection des gaz de turbine et une cavité aval pouvant être alimentée, au travers du carter externe de la veine, en hydrogène et/ou en gaz de combustion provenant d'un générateur de gaz externe, lesdits bras et lesdits anneaux possédant des orifices d'injection des gaz à partir de leurs cavités amont et aval.

Selon une autre particularité de l'invention, la tuyère pour les modes de fonctionnement turbo et stato est convergente-divergente et comporte des moyens de variation continue de la section de col.

D'autre part, la partie convergente de la tuyère est annulaire et débouche dans la tuyère divergente du moteur fusée au travers d'une section escamotée de celle-ci.

Enfin selon une autre caractéristique de l'invention, la tuyère du propulseur en mode fusée comporte une première section divergente fixe située juste en aval du moteur fusée, une seconde section divergente pouvant être escamotée et remplacée par des moyens mobiles (12,18) formant avec le carter externe un col convergent-divergent à section variable pour les gaz provenant de la veine annulaire en mode turbo ou stato, la seconde section étant suivie d'une troisième section divergente fixe formant tuyère divergente pour les trois modes de propulsion turbo, stato et fusée.

D'autres caractéristiques importantes de l'invention et les détails de sa réalisation seront explicités en regard des planches annexées parmi lesquelles :

- la figure 1 montre le domaine de vol d'un véhicule propulsé par un propulseur selon l'invention, domaine de vol auquel il a été fait référence plus haut.
- la figure 2 montre de façon schématisée le principe d'un propulseur turbo-stato-fusée à cycle dit expander,
- la figure 3 montre de façon schématisée le principe d'un propulseur turbo-stato-fusée à générateur de gaz extérieur pour le fonctionnement de la turbine,
- la figure 4 montre en coupe longitudinale le mode de réalisation qui permet selon l'invention d'être compatible avec les deux types d'alimentations schématisés aux figures 2 et 3, représenté ici pour l'exemple en configuration de type à cycle expander selon la figure 2. La structure du propulseur en lui-même serait inchangée si on la représentait alimentée par un générateur de gaz extérieur ; seules les tubulures externes d'alimentation seraient à modifier,
- la figure 5 montre en semi-coupe longitudinale le détail grossi des parties tournantes de l'ensemble compresseur-turbine,
- la figure 6 montre en perspective une partie du dispositif d'injection des gaz de turbine et/ou des ergols de propulsion dans la chambre de combustion apte à fonctionner en modes turbo et stato et la figure 6a en est ue coupe selon AA des figures 4 et 5,
- les figures 7, 8, et 9 montrent les moyens de variation de section du col de tuyère des modes turbo et stato et les moyens d'escamotage de la tuyère à col variable, pour le passage en mode fusée en reformant une tuyère divergente en aval du moteur fusée.

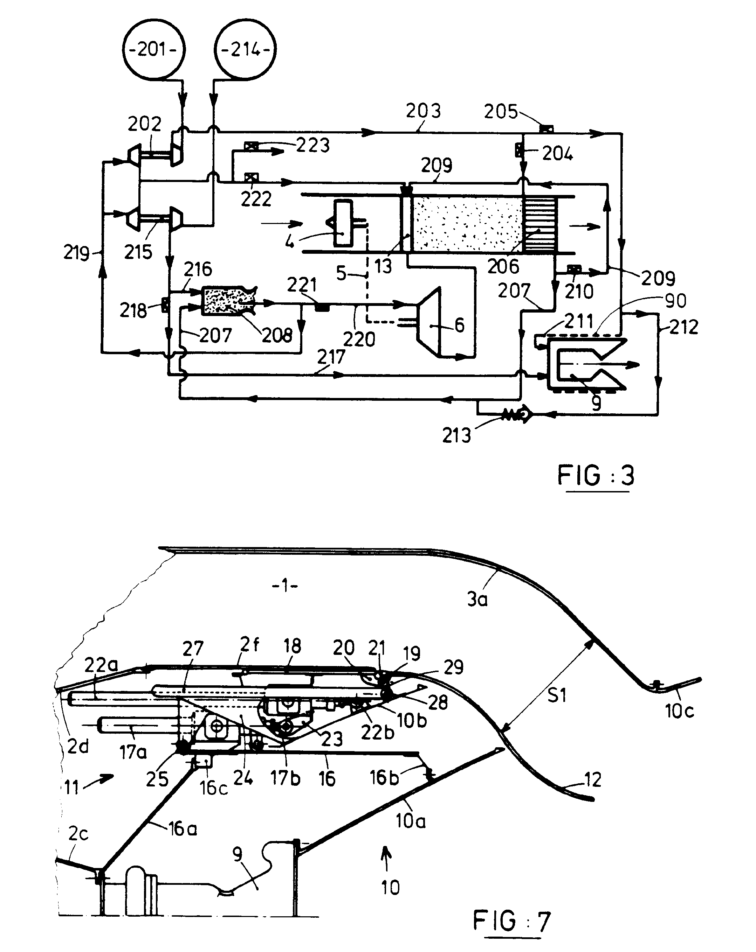

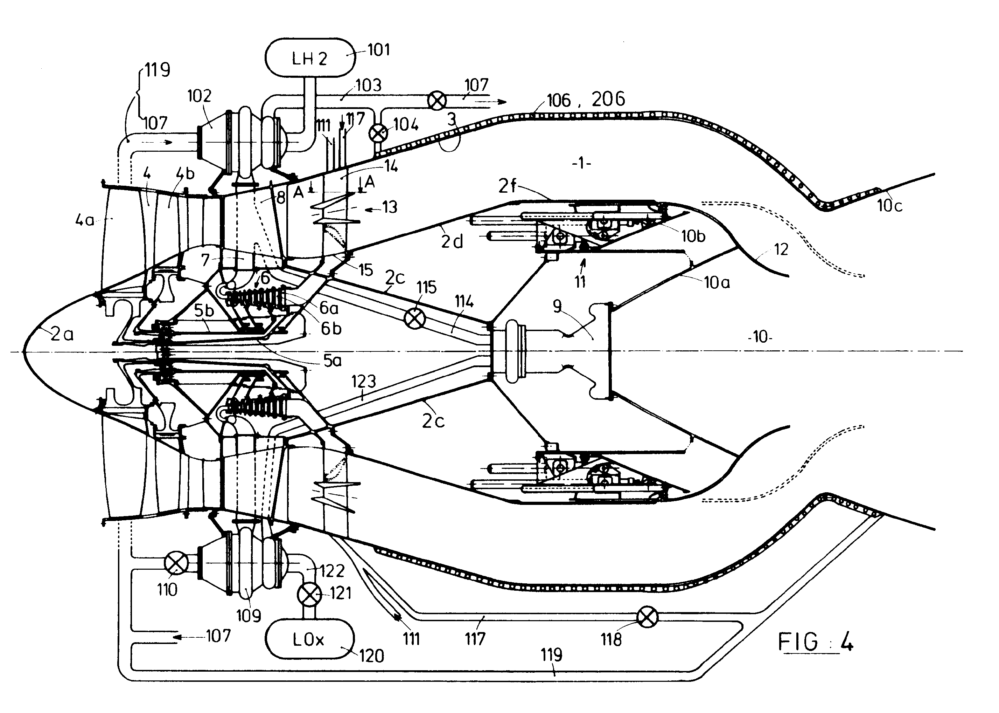

Si l'on regarde les figures 2 et 3,on a représenté deux types d'alimentation en ergols compatibles avec la structure de propulseur qui sera décrite en regard des figures 4 à 9.

A la figure 2 on a représenté le circuit hydraulique d'un propulseur combiné turbostatofusée à cycle dit expander.

Dans ce schéma, bien que l'on ait représenté la turbine de puissance et le moteur fusée en dehors de la veine d'air, pour des raisons de commodité du schéma, il s'agit bien respectivement de la turbine 6 et de la fusée centrale 9 disposées dans le corps central 2 du propulseur décrit aux figures 4 à 9.

Dans le propulseur à cycle expander, le seul ergol utilisé en mode stato ou turbo est l'hydrogène.

L'hydrogène liquide issu d'un réservoir de stockage 101 est pompé au moyen d'une turbopompe 102 puis est amené par une canalisation 103 et deux vannes 104,105 d'une part à un échangeur de chaleur 106 disposé sur la paroi de la chambre de combustion située dans la veine aérobie du propulseur en modes turbo et stato, et d'autre part à une canalisation 107 qui, munie d'un clapet anti-retour 108 va alimenter les turbines de deux turbopompes, l'une 102 déjà citée et l'autre 109 destinée à l'alimentation en oxygène du moteur-fusée 9. Une vanne 110 permet d'isoler la turbopompe 109 du circuit quand besoin est, c'est à dire en modes turbo et stato.

En sortie des turbines des turbopompes 102 et 109, l'hydrogène qui vient d'être détendu et qui a donc utilisé une partie de son énergie, est séparé en deux circuits dont l'un, 111, commandé par une vanne 112 autorise l'injection d'hydrogène dans un dispositif d'injection 13, de la chambre de combustion de la veine aérobie et dont l'autre, 113, se ramifie lui même en deux partie 114 et 7 commandées chacune par une vanne 115,116. Le circuit 7 alimente la turbine de puissance 6, qui entraîne le compresseur d'air en mode turbo, tandis que le circuit 114 alimentera en mode fusée le moteur fusée 9. La sortie de la turbine 6 est reliée à la partie interne du dispositif d'injection 13.

Si l'on revient à l'échangeur de chaleur 106, on voit que l'hydrogène en sortie dudit échangeur, où il a prélevé des calories et augmenté son enthalpie, est utilisé pour alimenter deux circuits, l'un 117 commandé par une vanne 118 permet l'injection en mode stato de l'hydrogène dans le dispositif d'injection 13, tandis que l'autre circuit, 119, va rejoindre la tubulure 107 en aval du clapet anti-retour 108 pour apporter l'énergie nécessaire à l'entraînement de la turbopompe 102, en modes turbo et stato. En mode fusée, les turbopompes 102 et 109 sont entraînées par l'hydrogène circulant dans la moulure 107 qui a prélevé des calories dans un échangeur de chaleur 90 situé sur la paroi de la chambre du moteur fusée 9.

Pour finir la description du circuit d'alimentation en ergols, il faut ajouter qu'il comporte un réservoir d'oxygène 120 qui peut être isolé par une vanne 121 et dont la sortie 122 est branchée sur la pompe de la turbopompe 109 dont le débit de sortie alimente, par une tubulure 123 en mode fusée seulement, un moteur-fusée 9, disposé axialement dans la partie aval du propulseur.

Les différents modes de fonctionnement sont conditionnés par l'ouverture/fermeture des différentes vannes ci-dessus mentionnées afin d'alimenter ou d'interrompre telle ou telle autre partie du circuit, ce qui peut être résumé par le tableau suivant dans lequel les différents modes de fonctionnement sont indiqués avec en regard, l'état d'ouverture (O) / fermeture (F) de chacune des vannes :

| MODE DE FONCTIONNEMENT | VANNES | | | | | | | |
|---|---|---|---|---|---|---|---|---|
| | 104 | 105 | 110 | 112 | 115 | 116 | 118 | 121 |
| TURBO-EXPANDER | O | F | F | F | F | O | O | F |
| STATO-REACTEUR | O | F | F | O | F | F | O | F |
| FUSEE | F | O | O | F | O | F | F | O |

Le fonctionnement d'un tel propulseur est le suivant :

Le démarrage est assuré par un démarreur à poudre (non représenté) qui entraîne la turbine de turbopompe à $LH_2$ 102. En mode turboexpander, la vanne 110 étant fermée, la turbopompe à LOx 109 est arrêtée. La vanne 105 étant également fermée, la totalité du débit d'hydrogène passe dans l'échangeur de chaleur 106.

$LH_2$, comprimé par la turbopompe 102 et vaporisé dans l'échangeur 106 entraîne la turbopompe 102 puis la turbine 6 du moteur, (laquelle entraîne le compresseur 4) et enfin est injecté dans la chambre de combustion par le dispositif d'injection 13. Simultanément la vanne 118 étant ouverte, le dispositif d'injection est également alimenté en hydrogène directement depuis la sortie de l'échangeur de chaleur 106, ce qui permet d'assurer un bon refroidissement du bord de fuite des bras 14 et des anneaux 19 et 20.

Le passage en mode statoréacteur s'effectue en isolant la turbine 6 par fermeture de la vanne 116 et ouverture simultanée de la vanne 112 de façon à ce que l'hydrogène en sortie de turbine de la turbopompe 102 soit injecté au moyen de la canalisation 111 dans le dispositif d'injection 13. Les vannes 104,118 étant ouvertes, la partie du débit d'hydrogène sorti de l'échangeur 106, qui n'est pas utilisé dans la turbopompe 102 est injectée directement au moyen de la canalisation 117 dans le dispositif d'injection 13.

Le passage en mode fusée s'effectue par fermeture de la vanne 104 et ouverture simultanée des vannes 105, 110, 115 et 121. L'hydrogène issu de la pompe 102 alimente par 107 les turbines des deux turbopompes 102 et 109, puis par 113 et 114 est injecté dans la chambre du moteur fusée 9.

L'oxygène pompé par 109 est amené par la canalisation 123 à la chambre du moteur-fusée 9.

Dans ce dernier mode de fonctionnement, la turbine 6 n'est pas alimentée et le compresseur 4 n'est plus alimenté en air, l'entrée d'air ayant été fermée. Le dispositif d'injection 13 n'est alors plus alimenté en hydrogène.

Si l'on se réfère maintenant à la figure 3, on verra qu'un propulseur comportant la structure d'injection selon l'invention peut être utilisé avec un générateur de gaz complémentaire pour l'entraînement de la turbine 6 et des turbopompes à hydrogène et à oxygène.

L'hydrogène liquide issu du réservoir 201 est pompé par la pompe de la turbopompe 202 puis est amené par une tubulure 203 à deux vannes en parallèle 204 et 205. En aval de la vanne 204 est disposé un échangeur de chaleur de tuyère 206 en sortie duquel le circuit d'hydrogène se sépare en deux parties, la première 207 alimentant directement le générateur de gaz 208 en hydrogène(préalablement vaporisé dans l'échangeur 206), tandis que la seconde partie 209, commandé par une vanne 210 permet en modes turbo et stato l'injection de carburant dans le dispositif d'injection 13.

Le circuit commandé par la vanne 205 se sépare lui aussi en deux parties. Une première partie 211 alimentera en $H_2$ la chambre du moteur-fusée 9 tandis que la seconde tubulure 212 comportant un clapet anti-retour 213 rejoindra la tubulure 207 pour apporter un complément de débit d'hydrogène au générateur de gaz 208.

Le circuit d'oxygène comprend un réservoir de stockage 214 à partir duquel l'oxygène est pompé par une turbopompe 215. En sortie de ladite pompe, le circuit d'oxygène se divise en deux : une partie 216 sert à l'alimentation permanente en oxygène du générateur de gaz 208 tandis que l'autre partie 217 commandée par une vanne 218, servira en mode fusée à l'alimentation de la chambre du moteur fusée 9.

Les gaz de combustion du générateur 208 servent d'une part à alimenter en continu, par une tubulure 219, les turbines des deux turbopompes 202 et 215 et, d'autre part à alimenter par une canalisation 220, commandée par une vanne 221, la turbine 6 dont les gaz d'éjection seront injectés dans le dispositif d'injection 13/

Quant à la partie du débit de gaz issue du générateur, utilisée dans les turbines 202 et 215, elle sera soit injectée au moyen d'une vanne 222 dans les cavités 14f des bras 14 pour être brûlée en mode turbo et stato, soit rejetée au moyen d'une vanne 223 dans le milieu ambiant, en mode fusée.

Les états d'ouverture (O) / Fermeture (F) des différentes vannes en fonction des modes d'utilisation sont résumés dans le tableau suivant :

| MODES DE FONCTIONNEMENT | VANNES | | | | | | |
|---|---|---|---|---|---|---|---|
| | 204 | 205 | 210 | 218 | 221 | 222 | 223 |
| TURBO-FUSEE | O | F | O | F | O | O | F |
| STATO-FUSEE | O | F | O | F | F | O | F |
| FUSEE | F | O | F | O | F | F | O |

Avec ce type de circuit d'alimentation, le fonctionnement du propulseur est le suivant :

Au démarrage les deux turbo-pompes 202 et 215 sont entraînées au moyen d'un démarreur à poudre, non représenté, soufflant sur leurs turbines.

En mode turbo-fusée, $LH_2$ et LOx sont mis en pression par les turbopompes puis, la vanne 204 étant ouverte et la vanne 205 fermée, la totalité du débit de $LH_2$ est réchauffée et vaporisée dans l'échangeur de tuyère 206 puis est amenée au générateur de gaz 208 par 207 tandis que l'oxygène y est amené par la canalisation 216.

Les gaz de combustion issus du générateur 208 sont utilisés simultanément pour entraîner les turbopompes 202 et 215 et la turbine de puissance 6 qui entraîne le compresseur 4, avant d'être injectés dans la veine au moyen du dispositif d'injection 13 où ces gaz, nettement excédentaires en $H_2$, brûlent à nouveau au contact de l'air atmosphérique comprimé et s'échappent par la tuyère à section réglable en donnant la poussée nécessaire à l'engin.

Le débit de gaz utilisé pour l'entraînement des turbines 202 et 215 est injecté dans la veine aérobie par le dispositif 13 en sortie duquel il se mélange à l'air comprimé et aux gaz du générateur 208 provenant de la turbine 6 pour être brûlé dans la chambre de combustion.

En mode stato-réacteur, les vannes 204 et 210 étant ouvertes et les vannes 205 et 221 fermées, une partie du débit d'hydrogène est amenée directement au dispositif d'injection 13 par la canalisation 209 tandis que l'autre partie du débit d'hydrogène est brûlée dans le générateur de gaz 208 comme précédemment. Le compresseur 4 et la turbine 6, isolée, tournent en autorotation et l'air entrant dans la veine 1 subit une simple compression dynamique dans l'entrée d'air. Dans ce mode de fonctionnement, l'intérêt du dispositif d'injection 13 est de permettre le mélange intime d'hydrogène vaporisé issu de 209 et des gaz de combustion du générateur 208.

En mode fusée, les vannes 204, 210, 221 et 222 sont fermées. Le débit d'hydrogène est amené pour partie à la fusée 9 par la canalisation 211 et pour partie au générateur de gaz 208 par les canalisations 212 et 207, tandis que l'oxygène pompé par 215 est amené au générateur de gaz par 216 et au moteur fusée 9 par la canalisation 217 au travers de la vanne 218 ouverte.

A la figure 4 a été représenté le propulseur combiné turbo-stato-fusée conforme aux objectifs de la présente invention c'est à dire compatible avec les deux types de cycles d'alimentation, expander et à générateur de gaz qui viennent d'être décrits et qui en inclut les perfectionnements. L'environnement externe du propulseur (circuits d'alimentation) a été représenté pour un cycle d'alimentation "expander" correspondant à la figure 2 à des fins d'exemplification. L'adaptation au circuit "à générateur de gaz" selon la figure 3 ne modifie en rien la structure interne du propulseur, seules les alimentations étant modifiées.

Si l'on regarde les figures 4 à 9, le propulseur comporte une veine annulaire aérobie formée entre un corps central 2 et un carter externe 3. En amont de la veine est disposé un compresseur d'air 4 ici formé de deux étages contrarotatifs 4a,4b reliés par des arbres concentriques 5a, 5b à deux rotors eux-mêmes contrarotatifs et imbriqués 6a, 6b, d'une turbine de puissance 6, disposée à l'intérieur du corps central en aval du compresseur 4.

Le corps central 2 est formé de l'amont vers l'aval par un cône amont 2a, par les plates-formes des aubes des étages contrarotatifs 4a, 4b du compresseur 4 puis par une virole 2b supportant intérieurement les aubes d'un étage redresseur 4c. La virole 2b est suivie d'une grille formée de bras structuraux 8 en aval de laquelle est fixée une double virole tronconique. La partie interne 2c de cette double virole se rétreint vers l'aval et supporte axialement à son extrême aval le moteur-fusée 9.

La partie externe 2d, forme la paroi intérieure de la veine aérobie. Entre les viroles 2c et 2d du corps central 2 sont disposés les moyens de variation de section de col de la tuyère convergente-divergente des modes turbo et stato, moyens de variation qui seront décrits plus loin.

Le corps central comporte également un tambour interne amont 2e comprenant une portée cylindrique interne 301 servant de palier à un roulement amont 302 à l'intérieur duquel est monté tournant l'arbre 5b relié aux étages 6b de la turbine 6. Le tambour 2e comporte également une portée cylindrique intérieure 303 sur laquelle est monté tournant le roulement à rouleaux 304 aval de l'arbre 5b.

L'arbre 5a est monté tournant à l'intérieur de l'arbre 5b sur un roulement amont 305 monté dans une portée cylindrique de l'arbre 5b tandis qu'en aval, l'arbre 5b tourne à l'intérieur d'un roulement à rouleaux 306 monté dans un logement d'une virole tronconique fixe 307 solidaire de la virole intérieure 2c du corps central.

La turbine de puissance 6 entraînée par détente de l'hydrogène (cas du cycle expander) ou par les gaz du générateur 208 (cycle à générateur de gaz) est alimenté par une ou des tubulure(s) d'amenée de gaz 7 débouchant dans un anneau collecteur 6c, les gaz étant distribués par un diffuseur annulaire coudé 6d sur une directrice d'entrée 6e.

Les gaz ayant traversé la turbine 6 s'échappent entre une virole conique 308 et la virole 307, et au travers d'orifices 309 de la virole 2c sont amenés vers le dispositif d'injection 13 par des orifices 15 de la paroi 2d de la veine aérobie.

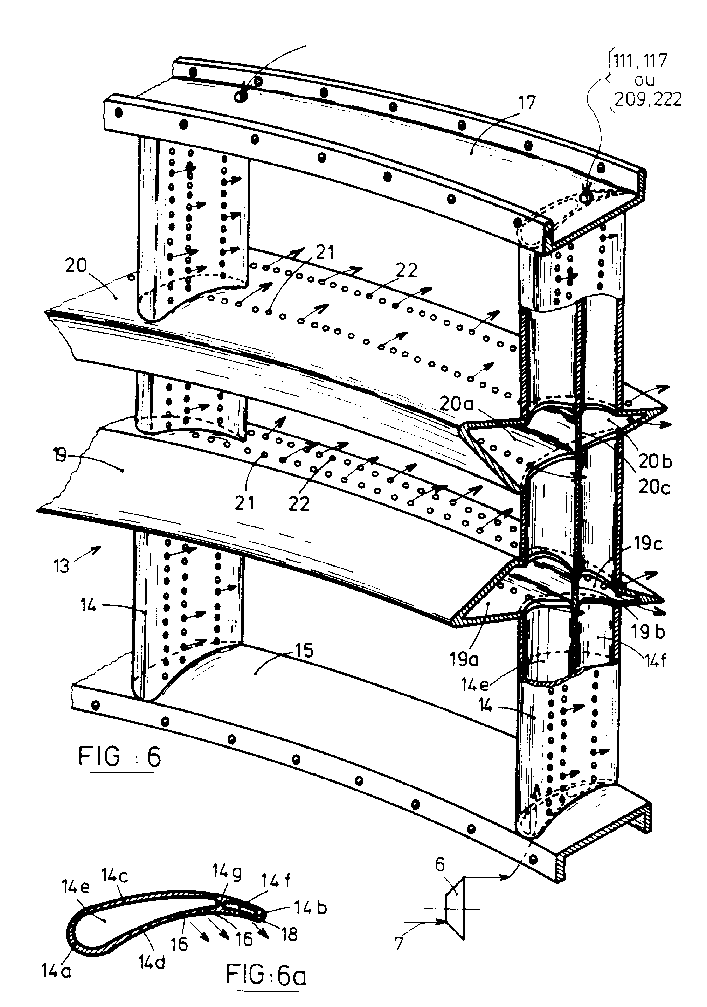

En sortie de turbine, les gaz qui l'ont traversée sont admis dans la veine 1 au moyen du dispositif d'injection 13 selon l'invention afin d'y être mélangés à l'air issu du compresseur 4 et brûlés en sortie du dispositif d'injection. Celui-ci est constitué (figures 6 et 6a) de bras radiaux 14 régulièrement répartis dans la veine. Un mode de réalisation prévu comportera ainsi vingt quatre bras 14 répartis tous les 15°. Chaque bras possède un profil aérodynamique avec un bord d'attaque 14a, un bord de fuite 14b un extrados 14c et un intrados 14d.

Comme on le voit à la section AA de la figure 6 chaque bras 14 est creux et est séparé en deux cavités, l'une amont 14e et l'autre aval 14f par une cloison 14g. La cavité 14e est en communication avec les orifices 15 de la paroi 2d, afin d'être alimentée par les gaz issus de la turbine 6. La cavité 14e possède sur sa partie la plus aval des orifices d'injection 16 percés dans la paroi d'intrados 14d des bras 14. Deux rangées d'orifices 16 peuvent par exemple être percées sur toute la hauteur des bras 14. La cavité 14e est fermée sur son extrémité radialement externe par la virole externe 17 du dispositif 13.

La cavité aval 14f, quant à elle traverse la virole 17 pour être alimentée en modes stato et turbo par les alimentations 111, 117 (circuit expander) ou 222, 209 (cycle à générateur de gaz) et son extrémité radialement interne est obturée par la virole interne 15. Des orifices d'injection 18 sont percés sur la paroi d'intrados 14d

6

sur la partie aval de la cavité 14f.

Le dispositif d'injection 13 comporte également deux anneaux collecteurs 19,20 possédant eux aussi un profil aérodynamique. L'anneau 19, disposé sensiblement au tiers de la hauteur radiale des bras 14 a son intrados tourné vers l'intérieur de la veine tandis que l'anneau 20 situé aux deux tiers de la hauteur de la veine radiale a son intrados tourné vers l'extérieur de la veine.

Les deux anneaux possèdent une cavité amont 19a, 20a qui débouche dans les cavités amont 14e de chacun des bras radiaux 14 et une cavité aval 19b, 20b qui débouche dans les cavités aval 14f des bras 14.

Des orifices d'injection 21,22 sont percés dans les intrados et extrados des anneaux 19,20 respectivement à proximité de la cloison 19c, 20c qui sépare les cavités 19a, 19b et 20a, 20b, pour l'injection dans la veine des gaz distribués par les cavités amont 19a, 20a des anneaux et à proximité du bord de fuite de l'anneau pour l'injection des gaz distribués par les cavités aval 19b, 20b.

Cette structure du dispositif d'injection formé de deux anneaux 19,20, dont le profil aérodynamique est opposé, a pour intérêt d'assurer la dispersion des gaz de turbine 6 ou de combustion du générateur 208, dans la plus grande partie du rayon de la veine aérobie, et par le mélange intime qu'il permet avec l'air comprimé issu du compresseur 4, de réaliser une combustion la plus homogène possible dans la chambre de combustion, que la compression d'air soit volontaire (fonctionnement en mode turbo avec compresseur 4 entraîné par la turbine 6) ou qu'il s'agisse d'une simple compression dynamique de l'air en fonctionnement stato où ce compresseur tourne en autorotation.

De plus ce dispositif a une structure où l'alimentation en mode turbo possède son entrée sur la virole interne tandis que l'entrée d'alimentation en mode stato s'effectue par la virole externe et, dans les deux cas, l'éjection des gaz dans la veine est réalisée sur toute la hauteur radiale des bras d'injection 14. Cette structure associée à la logique d'ouverture des vannes d'alimentation 112,118 (cycle expander) ou 210,222 (cycle à générateur de gaz) permet d'assurer un passage continu du mode turbo au mode stato, les cavités aval des bras 14 et des anneaux 19,20 étant alimentées dans les deux modes de fonctionnement, ce qui assure la transition entre les deux modes sans coupures d'admission ni de combustion.

Les gaz de combustion issus de la chambre de combustion sont éjectés vers l'aval du propulseur au travers d'une tuyère convergente-divergente à section de vol variable en fonction du mode de fonctionnement turbo ou stato.

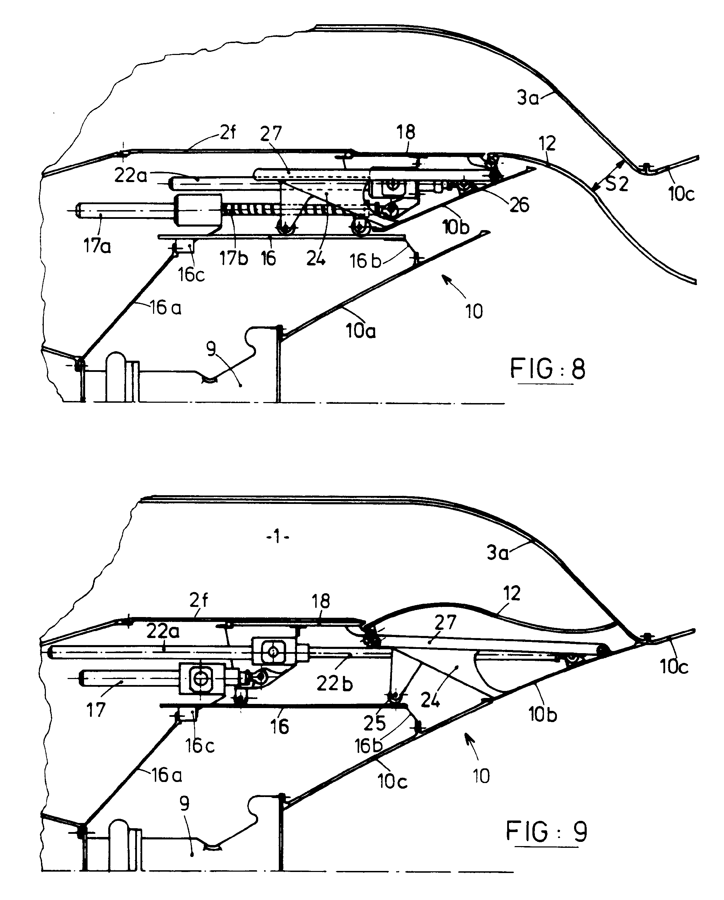

Pour assurer le réglage de la section du col de la tuyère annulaire en modes turbo et stato, et son obturation en mode moteur-fusée les moyens mobiles, globalement référencés 11 sur la figure 4, vont être décrits plus en détail en regard des figures 7 à 9.

A l'intérieur d'une partie aval cylindrique 2f du corps central 2 sont disposés des rails longitudinaux fixes 16 tenus sur la partie amont du moteur fusée 9 par un anneau 16c porté par une bride conique 16a et sur la première section 10a de tuyère divergente par une bride conique 16b.

Entre la virole cylindrique 2f et les rails 16 sont disposés plusieurs ensembles 11, par exemple trois répartis à 120° autour du corps central, ou, comme le montre la figure 1, quatre répartis à 90°.

Chaque ensemble 11 comporte un prémier vérin à vis 17 disposé longitudinalement dont le corps 17a est fixé sur la partie amont du rail 16 et dont la tige 17b, orientée vers l'aval est solidaire d'une virole cylindrique mobile 18 apte à coulisser en translation axiale sous la virole 2f contre laquelle elle est disposée.

Sur le bord aval de la virole coulissante 18 sont articulés (au moyen de pattes 19 coopérant avec des chapes 20 par des axes 21) des volets mobiles 12 en forme de pétales possédant une double courbure d'abord tournée vers l'axe du propulseur dans la partie amont des volets puis tournée radialement vers l'extérieur du propulseur dans la partie aval des volets.

L'ensemble formé par la virole cylindrique 18 et les volets 12, mobile en translation axiale au moyen du vérin 17, constitue, avec la partie aval convergente 3a du carter externe 3 qui se raccorde sur la section 10c divergente de la tuyère, les moyens de formation du col convergent-divergent et de variation de la section de ce dit col.

Un second vérin à vis 22, dont le corps 22a est solidaire d'une pièce de liaison 23 entre la tige 17b du premier vérin 17 et la virole 18, est disposé parallèlement à l'axe longitudinal du propulseur avec sa tige 22b orientée vers l'aval. Sur la tête du second vérin 22 est articulée une structure intermédiaire 24 mobile en translation axiale et possédant des galets 25 de roulement sur le rail fixe 16. Sur la partie aval de la structure mobile 24 est soudée une virole conique formant la seconde section divergente 10b de la tuyère 10, et c'est sur une chape 26 de cette virole 10b qu'est articulée la tige 22b du second vérin 22.

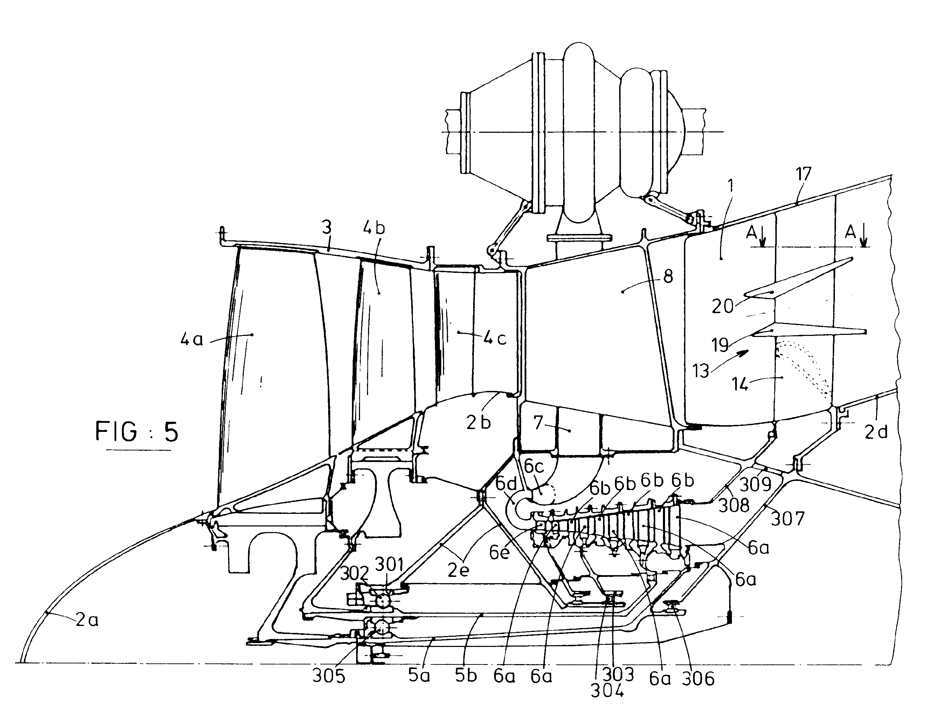

Sur sa partie radialement externe, la structure mobile 24 comporte deux rails de guidage 27 longitudinaux, avec lesquels coopèrent des galets de roulement 28 portés par une biellette 29 articulée sur l'axe de liaison 21 entre la virole 18 et les volets 12, pour permettre le coulissement des galets 28 dans les rails 27. De cette façon lors de l'extension de la tige du second vérin 22, qui amène vers l'aval la section divergente 10b de la tuyère, alors que le premier vérin 17 est en position tige rentrée, les volets s'escamotent vers l'extérieur pour laisser libre passage à la virole conique 10b (figure 5). Cette disposition permet de reconstituer la tuyère divergente 10 lors du passage du propulseur en mode fusée, l'éjection de gaz dans la veine annulaire ayant cessé à cet instant.

Les séquences de fonctionnement sont alors les suivantes :

En mode de fonctionnement turboréacteur au sol (figure 7), le premier et le second vérin 17 et 22 sont en position rétractée et la seconde section de tuyère divergente 10b est escamotée, les volets 12 étant en position amont dans laquelle ils définissent une section S1 de col de tuyère annulaire maximale pour l'éjection des gaz du turboréacteur.

Le vérin 17 est ensuite déployé progressivement lors de l'accélération en modes turbo puis en stato. A la fin du mode statoréacteur (figure 8), le premier vérin 17 est en position complètement étendue et le second 22 rétracté, la première virole cylindrique mobile 18 étant en position aval et les volets 12 en position aval dans laquelle ils définissent une section S2 de col de tuyère minimale pour l'éjection des gaz du statoréacteur.

En mode fusée, (figure 9) le premier vérin 17 est en position rétractée et le second vérin 22 étendu, les volets 12 étant escamotés tandis que la seconde section 10b de tuyère divergente est en position aval où elle obture la veine annulaire et assure la continuité de la tuyère 10 entre les première et troisième sections fixes 10a et 10c pour permettre l'éjection des gaz du moteur-fusée 9.

On voit sur les figures 7 et 8 qu'en jouant sur la position du vérin 17, on peut faire passer la section de col S de la tuyère annulaire de sa valeur maximale $S_1$ à sa valeur minimale $S_2$ de façon continue et réversible lors de l'accélération (passage du mode de propulsion turbo au mode stato et réciproquement).

On voit également que l'escamotage des volets et donc l'obturation de la veine et la formation de la tuyère fusée sont réversibles, ce qui permet de passer indifféremment du mode stato au mode fusée et réciproquement.

L'invention s'applique donc indifféremment à tout type de propulseurs utilisant successivement les trois modes.

Le type de propulseur ici décrit constitue une architecture simple tout autant utilisable pour les lanceurs bi-étages que pour les véhicules spatiaux mono-étage.

A ce titre, il permet de développer un concept unique de moteur pour ces deux types de mission et peut constituer une perspective économique de développement des propulseur de tels véhicules.

**Revendications**

1.  Propulseur combiné turbo-stato-fusée compatible avec deux types d'alimentation en ergols liquides,
    - l'un dit expander, comportant d'une part un circuit d'alimentation en hydrogène possédant un échangeur de chaleur (106) permettant une chauffe de l'hydrogène avant son introduction dans une turbine de puissance à ergol (6) en mode turbofusée ou dans une chambre de combustion en mode stato réacteur et d'autre part un circuit d'oxygène combiné avec le circuit d'hydrogène pour le mode fusée,
    - l'autre comportant deux circuits d'alimentation respectivement en oxygène et en hydrogène d'un générateur de gaz (208), lesdits gaz étant soit dirigés vers une turbine de puissance (6) entrainant un compresseur (4), en mode turbofusée, soit injectés dans la chambre de combustion en mode statoréacteur, soit relachés dans le milieu ambiant en mode fusée, propulseur comportant un corps central (2) entouré d'une veine d'air (1) elle même entourée d'un carter externe (3), la turbine de puissance (6) étant disposée à l'intérieur du corps central (2), alimenté en gaz ou en ergols à travers des bras structuraux (8) liant le corps central (2) au carter externe (3), ladite turbine (6) entraînant un compresseur d'air (4) le corps central (2) comportant axialement à sa partie aval un moteur fusée (9), lui même alimenté en ergols liquides et expulsant des gaz de propulsion dans une tuyère divergente (10), dont le circuit d'alimentation comporte, outre une turbopompe à oxygène liquide (109) pour le fonctionnement en mode fusée, une turbopompe (102) à hydrogène liquide dont la pompe débite dans deux canalisations commandées chacune par une vanne, caractérisé en ce que, l'une (105) des vannes permet à l'hydrogène de subir une chauffe dans un échangeur (90) situé sur la paroi de chambre du moteur fusée (9) puis commandant l'admission en mode fusée dans la chambre du moteur fusée, et en aval d'un clapet anti-retour (108), dans les turbines des deux turbopompes (102, 109), tandis que l'autre vanne (104) permet l'admission de H2 dans l'échangeur de chaleur de paroi de tuyère (106), en sortie duquel l'hydrogène réchauffé est débité dans deux canalisations, l'une (117) commandée par une vanne (118) permet l'injection d'hydrogène dans la chambre de combustion en modes turbo et stato tandis que l'autre (119) est apte à alimenter les turbines des turbopompes (102,109).

2.  Propulseur combiné selon la revendication 1 caractérisé en ce que le compresseur (4) et la turbine (6) sont de type axial.

3. Propulseur combiné selon la revendication 2, caractérisé en ce que le compresseur et la turbine sont de type double corps et contrarotatifs, le compresseur (4) comportant d'une part un premier étage amont (4a) relié anar un arbre central (5a) à un premier rotor de turbine comprenant n étage (6a) et d'autre part un second étage aval (4b) relié par un second arbre (5b)entourant le premier à un second rotor de turbine comprenant (n-1) étages (6b) imbriqués avec les étages du premier rotor et tournant en sens inverse, ladite turbine étant alimentée en gaz au moyen d'un anneau collecteur (6c) recevant les gaz par des canalisations traversant les bras structuraux tandis que ladite turbine éjecte ces gaz dans un canal annulaire formé entre deux viroles coniques (307,308) du corps central (2) et débouchant au travers de la paroi (15) cu corps central dans un dispositif d'injection (13) disposé dans la chambre de combustion de la veine annulaire.

4. Propulseur combiné selon la revendication 3 caractérisé en ce que le dispositif d'injection est constitué par un ensemble de bras radiaux (14) creux coopérant avec deux anneaux collecteurs (19,20) également creux, les bras et les anneaux possédant un profil aérodynamique, lesdits bras possédant une cavité amont (14e) en relation avec le canal annulaire d'éjection des gaz de turbine (6) et une cavité aval (14f) pouvant être alimentée au travers du carter externe (17) de la veine en hydrogène et/ou en gaz de combustion d'un générateur de gaz externe, lesdits bras et lesdits anneaux possédant des orifices d'injection (16,18,21,22) des gaz à partir de leurs cavités amont (14e, 19a, 20a) et aval (14f, 19b, 20b).

5. Propulseur combiné selon l'une quelconque des revendications 1 à 4 caractérisé en ce qu'il comporte deux turbopompes extérieures (resp. 109,102 et 215,202) fixées au carter externe au niveau des bras structuraux du propulseur, lesdites pompes servant respectivement à l'alimentation en LOX et en LH2 et ayant leurs turbines d'entraînement alimentées soit en H2, soit en gaz de combustion d'un générateur de gaz annexe (208), la sortie des gaz de leurs turbines s'effectuant vers la turbine de puissance (6) au travers des bras structuraux (8), ou directement dans la veine d'air (1) au moyen du système d'injection (13).

6. Propulseur combiné selon l'une quelconque des revendications 1 à 5 caractérisé en ce que la chambre de combustion située dans la veine annulaire (1) et la tuyère qui la prolonge sur leur paroi externe (3) constituée par deux peaux collées l'une à l'autre et cannelées pour former entre elles des canaux d'échangeur de chaleur (resp 106,206) dans lequel l'hydrogène, issu de la turbopompe à LH2, peut circuler pour refroidir la paroi de la chambre et de la tuyère et absorber des calories pour augmenter son enthalpie avant d'être utilisé dans les turbines des turbopompes (resp 102,109) et/ou dans la turbine (6) et/ou pour l'alimentation d'un générateur de gaz (208) en mode turbo,et dans la chambre de combustion de la veine annulaire en mode stato.

7. Propulseur combiné selon l'une quelconque des revendications 1 à 6 caractérisé en ce que la tuyère en mode aérobie est convergente-divergente et comporte des moyens de variation (11,12,18) continue de sa section de col (S).

8. Propulseur combiné selon la revendication 7, caractérisé en ce que la partie convergente de la tuyère aérobie est annulaire et débouche dans la tuyère divergente (10) du moteur fusée (9) au travers d'une section escamotable (10b) de celle ci.

9. Propulseur selon la revendication 8 caractérisé en ce que la tuyère du propulseur comporte une première section divergente fixe (10a) située juste en aval du moteur fusée (9), une seconde section divergente (10b) pouvant être escamotée et remplacée par des moyens mobiles (12,18) formant avec le carter externe (3a) un col convergent-divergent à section S variable pour les gaz provenant de la veine annulaire en mode turbo ou stato, la seconde section 10b) étant suivie d'une troisième section divergente (10c) fixe formant tuyère divergente pour les trois modes de propulsion turbo, stato et fusée.

10. Propulseur combiné selon la revendication 7, caractérisé en ce que des moyens mobiles formant le col convergent-divergent sont constitués par une première virole cylindrique (18) mobile axialement vers l'aval et en aval de laquelle sont accrochés des volets mobiles (12).

11. Propulseur combiné selon la revendication 10, caractérisé en ce que la sortie conjointe des turbopompes (102) et (109) est reliée d'une part au moyen d'une vanne de commande (112) au dispositif d'injection de la chambre de combustion pour l'alimenter en mode stato, et d'autre part au moyen d'une vanne (116) à la turbine de puissance du propulseur en mode turbo seulement, et au moyen d'une vanne (115) ouverte en mode fusée seulement à la chambre de moteur-fusée (9) pour l'alimenter en hydrogène gazeux.

12. Propulseur combiné selon la revendication 11 caractérisé en ce que la turbopompe à oxygène 109 dont la turbine est alimentée en hydrogène au travers d'une vanne 110 ouverte seulement en mode fusée, alimente la chambre du moteur-fusée (9) en oxygène prélevé dans un réservoir (120) au travers d'une vanne (121) ouverte seulement en mode fusée.

13. Propulseur combiné selon l'une quelconque des revendications 1 à 10 comportant un circuit d'alimentation muni d'un générateur de gaz annexe (208) pour l'alimentation des turbines de turbopompes (202 et 215) et en mode turbo seulement pour l'alimentation de la turbine (6) caractérisé en ce que ledit générateur de gaz est alimenté par une canalisation (207) en hydrogène gazeux ayant subi un échauffement préalable dans un échangeur de chaleur de paroi de tuyère (206) et en ce qu'il est alimenté en oxygène par une turbopompe (215) également apte à alimenter au travers d'une vanne (218) ouverte en mode fusée, la chambre du moteur fusée (9).


**Patentansprüche**

1. Kombiniertes Turbo-, Staustrahl- Raketen-Triebwerk, geeignet für zwei Arten der Speisung mit flüssigen Ergolen,
   - von denen die eine, die als "Expander" bezeichnet wird, aufweist: einerseits einen Wasserstoff-Speisekreis mit einem Wärmetauscher ( 106), der eine Erhitzung des Wasserstoffs ermöglicht, bevor dieser im Turbo-Raketenbetrieb in eine Ergol-Leistungsturbine (6) oder im Betrieb als Staustrahl-Triebwerk in eine Brennkammer eingeführt wird, und andererseits einen Sauerstoffkreis, der für den Raketebetrieb mit dem Wasserstoffkreis kombiniert ist, und
   - von denen die andere zwei Speisekreise zur Speisung eines Gasgenerators (208) mit Sauerstoff bzw. mit Wasserstoff aufweist, wobei die Gase entweder in der Betriebsart als Turbo-Rakete zu einer einen Verdichter (4) antreibenden Leistungsturbine (6) geleitet oder in der Betriebsart als Staustrahl-Triebwerk in die Brennkammer eingespritzt oder in der Betriebsart als Rakete an die Umgebung abgegeben werden,
   wobei das Triebwerk einen zentralen Körper (2) aufweist, der von einem Luftströmungskanal (1) umschlossen ist, der seinerseits von einem äußeren Gehäuse (3) umgeben ist, wobei die Leistungsturbine (6) im Innern des zentralen Körpers (2) angeordnet ist und durch konstruktive Arme (8), die den zentralen Körper (2) mit dem äußeren Gehäuse (3) verbinden, mit Gas oder Ergolen gespeist wird, und wobei die genannte Turbine (6) einen Luftverdichter (4) antreibt und der zentrale Körper (2) in seinem stromabwärtigen Teil einen axial angeordneten Raketenmotor (9) aufweist, der seinerseits mit flüssigen Ergolen gespeist wird und Antriebsgase in eine divergierende Düse (10) ausstößt und dessen Speisekreis außer einer Turbopumpe (109) für flüssigen Sauerstoff für den Raketenbetrieb eine Turbopumpe (102) für flüssigen Wasserstoff enthält, deren Pumpe an zwei Leitungen liefert, die jeweils durch ein Ventil gesteuert werden,
   **dadurch gekennzeichnet,**
   daß eines (105) der Ventile eine Erhitzung des Wasserstoffs in einem auf der Wandung der Kammer des Raketenmotors (9) angeordneten Wärmetauscher (90) und dann im Raketenbetrieb den Eintritt in die Kammer des Raketenmotors und auf der stromabwärtigen Seite eines Rückschlagventils in die Turbine der beiden Turbopumpen (102, 109) ermöglicht, während das andere Ventil (104) den Einlaß von H2 in den Wärmetauscher auf der Wandung der Düse (106) ermöglicht, an dessen Ausgang der erhitzte Wasserstoff in zwei Leitungen abgegeben wird, von denen eine (117), die durch ein Ventil (118) gesteuert wird, im Turbo- und Staustrahlbetrieb das Einspritzen von Wasserstoff in die Brennkammer ermöglicht, während die andere (119) zur Speisung der Turbinen der Turbopumpen (102, 109) dient.

2. Kombiniertes Triebwerk nach Anspruch 1, dadurch gekennzeichnet, daß der Verdichter (4) und die Turbine (6) vom Axialtyp sind.

3. Kombiniertes Triebwerk nach Anspruch 2, dadurch gekennzeichnet, daß der Verdichter und die Turbine vom Doppelkörpertyp und gegenläufig sind, wobei der Verdichter (4) einerseits eine erste stromaufwärtige Stufe (4a) besitzt, die über eine zentrale Welle (5a) mit einem ersten Turbinenrotor verbunden ist, der n Stufen (6a) aufweist, und andererseits eine zweite stromabwärtige Stufe (4b), die über eine die erste Welle umgebende zweite Welle (5b) mit einem zweiten Turbinenrotor verbunden ist, der (n-1) Stufen (6b) aufweist, die mit den Stufen des ersten Rotors verschachtelt sind und in entgegengesetzter Richtung rotieren, wobei die Turbine mittels eines Kollektorrings (6c) mit Gas gespeist wird, der die Gase über Leitungen aufnimmt, die durch die genannten konstruktiven Arme verlaufen, während die Turbine diese Gase in einen zwischen zwei konischen Rohren (207, 208) des zentralen Körpers (2) gebildeten ringförmigen Kanal ausstößt, der durch die Wandung (15) des zentralen Körpers in eine Einspritzvorrichtung (13) mündet, die in der Brennkammer der ringförmigen Strömung angeordnet ist.

4. Kombiniertes Triebwerk nach Anspruch 3, dadurch gekennzeichnet, daß die Einspritzvorrichtung aus einer Gruppe von hohlen radialen Armen (14) besteht, die mit zwei ebenfalls hohlen Kollektorringen (19, 20) zusammenwirken, wobei die Arme und die Ringe ein aerodynamisches Profil besitzen, daß die Arme einen stromaufwärtigen Hohlraum (14e) aufweisen, der mit dem ringförmigen Gasauslaßkanal der Turbine (6) in Verbindung steht, sowie einen stromabwärtigen Hohlraum (14f), der durch das äußere Gehäuse (17) des Wasserstoff- und/oder Verbrennungsgas-Strömungskanals eines externen Gasgenerators, gespeist werden kann, und daß die Arme und die Ringe von ihren stromaufwärtigen (14e, 19a, 20a) und stromabwärtigen (14f, 19b, 20b) Hohlräumen ausgehende Gas-Einspritzöffnungen (16, 18, 21, 22) auweisen.

5. Kombiniertes Triebwerk nach einem der Ansprüche 1 bis 4, dadurch gekennzeichnet, daß es zwei äußere Turbopumpem (109, 112 bzw. 215, 202) besitzt, die in Höhe der konstruktiven Arme des Triebwerks an dem äußeren Gehäuse befestigt sind, wobei die genannten Pumpen zur Speisung mit flüssigem Sauerstoff LOX bzw. mit flüssigem Wasserstoff LH2 dienen und ihre Antriebsturbinen entweder mit H2 oder mit Verbrennungsgasen eines angebauten Gasgenerators (298) gespeist werden, wobei der Gasauslaß ihrer Turbinen über die konstruktiven Arme (8) zu der Leistungsturbine (6) oder mit Hilfe des Einspritzsystems (13) direkt in den Luftströmungskanal erfolgt.

6. Kombiniertes Triebwerk nach einem der Ansprüche 1 bis 5 dadurch gekennzeichnet, daß die Außenwand der in dem ringförmigen Strömungskanal liegenden Brennkammer und der diese verlängernden Düse aus zwei Schalen besteht, die gerippt und miteinander verklebt sind, so daß zwischen ihnen Wärmetauscherkanäle (106 bzw. 206) gebildet werden, in denen der Wasserstoff, der von der Turbopumpe für flüssigen Wasserstoff LH2 abgegeben wird, zirkulieren kann, um die Wandung der Kammer und der Düse zu kühlen und Kalorien auzunehmen und seine Enthalpie zu vergrößem, bevor er im Turbobetrieb in den Turbinen der Turbopumpen (102 bzw. 109) und/oder in der Turbine (6) und/oder zur Speisung eines Gasgenerators (208) und im Staustrahlbetrieb in der Brennkammer des ringförmigen Strömungskanals genutzt wird.

7. Kombiniertes Triebwerk nach einem der Ansprüche 1 bis 6 dadurch gekennzeichnet daß die Düse im luftatmenden Betrieb konvergierende-divergierende Form hat und Mittel (11, 12, 8) zur kontinuierlichen Änderung des Querschnitts (S) ihres Halses aufweist.

8. Kombiniertes Triebwerk nach Anspruch 7, dadurch gekennzeichnet, daß der konvergierende Teil der luftatmenden Düse ringförmig ist und in der divergierenden Düse (10) des Raketenmotor (9) über einen versenkbaren Abschnitt (10b) derselben mündet.

9. Kombiniertes Triebwerk nach Anspruch 8, dadurch gekennzeichnet, daß die Düse des Triebwerks einen festen ersten divergierenden Abschnitt (10a) aufweist, der unmittelbar stromabwärts des Raketenmotors (9) liegt, ferner einen zweiten divergierenden Abschnitt (10b), der versenkbar ist und durch bewegliche Mittel (12, 18) ersetzbar ist, die mit dem äußeren Gehäuse (3a) einen konvergierenden-divergierenden Hals mit variablem Querschnitt (S) für die im Turbo- oder Staustrahlmodus aus dem ringförmigen Strömungskanal kommenden Gase bildet, sowie einen auf den zweiten Abschnitt (10b) folgenden dritten festen Abschnitt (10c), der eine divergierende Düse für die drei Antriebsarten Turbo-, Staustrahl- und Raketenbetrieb bildet.

10. Kombiniertes Triebwerk nach Anspruch 7, dadurch gekennzeichnet, daß die beweglichen Mittel, die den konvergierenden-divergierenden Hals bilden, aus einem ersten zylindrischen Ring (18) bestehen, der in stromabwärtiger Richtung radial bewegbar ist und auf dessen stromaufwärtiger Seite bewegliche Klappen (12) angebracht sind.

11. Kombiniertes Triebwerk nach Anspruch 10, dadurch gekennzeichnet, daß der zusammengeführte Ausgang der Turbopumpen ( 102 und 109) einerseits über ein Steuerventil (112) mit der Einspritzvorrichtung der Brennkammer verbunden ist, um diese im Staustrahlbetrieb zu speisen, und andererseits im Turbobetrieb über ein Ventil (116) nur mit der Leistungsturbine des Triebwerks verbunden ist, und mit Hilfe eines nur im Raketenbetrieb geöffneten Ventils ( 115) mit der Kammer des Raketenmotors (9) verbunden ist, um diese mit gasförmigem Wasserstoff zu speisen.

12. Kombiniertes Triebwerk nach Anspruch 11, dadurch gekennzeichnet, daß die Turbopumpe (109) für Wasserstoff, deren Turbine über ein nur im Raketenbetrieb geöffnetes Ventil ( 109) mit Wasserstoff gespeist wird, ihrerseits die Kammer des Raketenmotors (9) mit Sauerstoff speist, der über ein nur im Raketenbetrieb geöffnetes Ventil ( 121 ) aus einem Vorratsbehälter (120) entnommen wird.

13. Kombiniertes Triebwerk nach einem der Ansprüche 1 bis 10, das einen Speisekreis aufweist, ausgestattet mit einem angebauten Gasgenerator (208) für die Speisung der Turbinen der Turbopumpen (202 und 215) und zur Speisung der Turbine (6) allein im Turbobetrieb, dadurch gekennzeichnet, daß der Gasgenerator über eine Leitung (207) mit zuvor in einem Wärmetauscher (206) der Düsenwandung erhitztem gasförmigem Wasserstoff gespeist wird, und daß er von einer Turbopumpe (215) mit Sauerstoff gespeist wird, die über ein im Raketenbetrieb geöffnetes Ventil (218) die Kammer des Raketenmotors (9) speisen gleichfalls kann.


## Claims

1. Combined turbojet-ramjet rocket motor propulsion unit compatible with two types of liquid ergol feed,
   - one called an expander, comprising, on the one hand, a hydrogen feed circuit having a heat exchanger (106) allowing the hydrogen to be heated before it is introduced into an ergol-powered turbine (6) in the turbo-rocket mode or into a combustion chamber in the ramjet mode and, on the other hand, an oxygen circuit combined with the hydrogen circuit for the rocket mode,
   - the other comprising two oxygen supply and hydrogen supply circuits respectively for a gas generator (208), the said gases either being directed towards a power turbine (6) driving a compressor (4), in the turbo-rocket mode, or injected into the combustion chamber in the ramjet mode, or released into the surrounding medium in the rocket mode, the propulsion unit comprising a central spool (2) surrounded by an airstream (1) itself surrounded by an external casing (3), the power turbine (6) being arranged inside the central spool (2), supplied with gas or with ergols through structural arms (8) connecting the central spool (2) to the external casing (3), the said turbine (6) driving an air compressor (4), the central spool (2) axially comprising at its downstream part a rocket motor (9), itself supplied with liquid ergols and expelling propulsion gases into a diverging nozzle (10), whose supply circuit comprises, other than a liquid oxygen turbo pump (109) for operation in rocket mode, a liquid hydrogen turbo pump (102) whose pump delivers into two pipelines each controlled by a valve, characterised in that one (105) of the valves allows the hydrogen to undergo heating in an exchanger (90) situated on the chamber wall of the rocket motor (9) then controlling the admission in rocket mode into the chamber of the rocket motor, and downstream of a non-return valve (108), in the turbines of the two turbo pumps (102, 109), whilst the other valve (104) allows the admission of H2 into the nozzle-wall heat exchanger (106), at the outlet from which the heated hydrogen is delivered into two pipelines, one (117) controlled by a valve (118) allowing hydrogen to be injected into the combustion chamber in the turbo jet and ram jet modes whilst the other (119) is able to supply the turbines of the turbo pumps (102, 109).

2. Combined propulsion unit according to Claim 1, characterised in that the compressor (4) and the turbine (6) are of the axial type.

3. Combined propulsion unit according to Claim 2, characterised in that the compressor and the turbine are of the twin-spool counter-rotating type, the compressor (4) comprising, on the one hand, a first upstream stage (4a) connected by a central shaft (5a) to a first turbine rotor comprising n stages (6a) and, on the other hand, a second downstream stage (4b) connected by a second shaft (5b) surrounding the first to a second turbine rotor comprising (n-1) stages (6b) imbricated with the stages of the first rotor and revolving in the opposite direction, the said turbine being supplied with gas by means of a collecting ring (6c) receiving the gases via pipelines passing through the structural arms whilst the said turbine ejects these gases into an annular passage formed between two conical shells (307, 308) of the central spool (2) and emerging through the wall (15) of the central spool into an injection device (13) arranged in the combustion chamber of the annular stream.

4.  Combined propulsion unit according to Claim 3, characterised in that the injection device consists of a set of hollow radial arms (14) interacting with two collecting rings (19, 20) which are also hollow, the arms and the rings having an aerodynamic shape, the said arms having an upstream cavity (14e) communication with the annular passage for the ejection of gases from the turbine (6) and a downstream cavity (14f) which can be supplied through the external casing (17) of the stream with hydrogen and/or with combustion gas from an external gas generator, the said arms and the said rings having injection orifices (16, 18, 21, 22) for the gases from their upstream cavities (14e, 19a, 20a) and downstream cavities (14f, 19b, 20b).

5.  Combined propulsion unit according to any one of Claims 1 to 4, characterised in that it comprises two external turbo pumps (109, 102 and 215, 202 respectively), fixed to the external casing at the region of the structural arms of the propulsion unit, the said pumps serving respectively to supply LOX and LH2 and having their drive turbines supplied either with H2, or with combustion gas from an appended gas generator (208), the outlet of the gas from their turbines being made towards the power turbine (6) through the structural arms (8), or directly into the airstream (1) by means of the injection system (13).

6.  Combined propulsion unit according to any one of Claims 1 to 5, characterised in that the combustion chamber situated in the annular stream (1) and the nozzle which extends it over their outer wall (3) consisting of two skins bonded to one another and splined in order to form between them heat exchanger passages (106, 206 respectively) in which the hydrogen, coming from the LH2 turbo pump, may flow in order to cool the wall of the chamber and of the nozzle and absorb the heat in order to increase enthalpy before being used in the turbines of the turbo pumps (102, 109 respectively) and/or in the turbine (6) and/or for supplying a gas generator (208) in the turbojet mode, and in the combustion chamber of the annular stream in the ramjet mode.

7.  Combined propulsion unit according to any one of Claims 1 to 6, characterised in that the nozzle in the aerobic mode is convergent-divergent and comprises means (11, 12, 18) for continuously varying its throat cross-section (S).

8.  Combined propulsion unit according to Claim 7, characterised in that the convergent part of the aerobic nozzle is annular and opens out into the divergent nozzle (10) of the rocket motor (9) through a retractable section (10b) of the latter.

9.  Propulsion unit according to Claim 8, characterised in that the nozzle of the propulsion unit comprises a first fixed divergent section (10a) situated just downstream of the rocket motor (9), it being possible for a second divergent section (10b) to be retracted and replaced by moving means (12, 18) forming, together with the external casing (3a) a convergent-divergent throat of variable cross-section S for the gases coming from the annular stream in the turbo jet or ram jet mode, the second section (10b) being followed by a third fixed divergent section (10c) forming a divergent nozzle for the three modes of propulsion: turbojet, ramjet and rocket.

10. Combined propulsion unit according to Claim 7, characterised in that the moving means forming the convergent-divergent throat consist of a first cylindrical shell (18) which can move axially downstream and downstream of which there are fastened moving flaps (12).

11. Combined propulsion unit according to Claim 10, characterised in that the joint outlet of the turbo pumps (102) and (109) is connected on the one hand by means of a control valve (112) to the injection device of the combustion chamber in order to supply it in the ramjet mode and, on the other hand, by means of a valve (116) to the power turbine of the propulsion unit solely in the turbojet mode, and by means of a valve (115) which is open solely in the rocket mode, to the rocket-motor chamber (9) in order to supply it with gaseous hydrogen.

12. Combined propulsion unit according to Claim 11, characterised in that the oxygen turbo pump (109) whose turbine is supplied with hydrogen through a valve (110) open solely in the rocket mode, supplies the chamber of the rocket motor (9) with oxygen taken from a tank (120) through a valve (121) open solely in the rocket mode.

13. Combined propulsion unit according to any one of Claims 1 to 10, comprising a supply circuit provided with an appended gas generator (208) for supplying the turbines of turbo pumps (202 and 215) and, solely in the turbo jet mode, for supplying the turbine (6), characterised in that the said gas generator is supplied via a pipeline (207) with gaseous hydrogen having undergone prior heating in a nozzle-wall heat exchanger (206), and in that it is supplied with oxygen via a turbo pump (215) also capable of supplying, through a valve (218) open in the rocket mode, the chamber of the rocket motor (9).

FIG : 1

FIG : 2

FIG : 3

FIG : 7

FIG : 4

FIG : 5

EP 0 362 053 B1

FIG : 6

FIG : 6a

FIG : 8

FIG : 9